# EUROPÄISCHE PATENTSCHRIFT

(11) **EP 1 989 096 B1**
(45) Veröffentlichungstag und Bekanntmachung des Hinweises auf die Patenterteilung: **27.05.2009**
(21) Anmeldenummer: 07711212.6
(22) Anmeldetag: 28.02.2007
(51) Int. Cl.: B62D 3/12, B62D 5/04, F16H 57/02

(54) **SCHRAUBRADGETRIEBE FÜR ZAHNSTANGENLENKUNG**
HELICAL BEVEL GEAR FOR A RACK-AND-PINION STEERING SYSTEM
ENGRENAGE HÉLICOÏDAL POUR UNE DIRECTION À CRÉMAILLÈRE

(30) Priorität: 02.03.2006 DE 102006010268
(43) Veröffentlichungstag der Anmeldung: 12.11.2008
(73) Patentinhaber: ZF Friedrichshafen AG, 88038 Friedrichshafen (DE)
(72) Erfinder: BEUTLER, Olaf, 49356 Diepholz (DE); ROGOWSKI, Waldemar, 49504 Lotte/Wersen (DE); BLANKENSPECK, Remt, 49457 Drebber (DE); LOHFINK, Günter, 38667 Bad Harzburg (DE)
(86) Internationale Anmeldenummer: PCT/DE2007/000373
(87) Internationale Veröffentlichungsnummer: WO 2007/098744

(56) Entgegenhaltungen:
- EP-B1- 1 339 596

## Beschreibung

Die Erfindung betrifft ein Schraubradgetriebe für eine Zahnstangenlenkung, mittels welchem eine Lenk- oder eine Lenkhilfskraft auf eine mit den zu lenkenden Rädern eines Kraftfahrzeugs in Wirkverbindung stehende Zahnstange übertragen wird. Dabei wird mittels des Getriebes ein von einer Lenkkraft oder einer Lenkhilfskraft verursachtes Drehmoment in eine translatorische Bewegung der Zahnstange gewandelt, welche dann über Schwenklager in eine Schwenkbewegung der Räder umgesetzt wird. Ein entsprechendes Getriebe besteht im Wesentlichen aus einem Schraubrad, an welchem das von der Lenk- oder Lenkhilfskraft verursachte Drehmoment angreift, und einem Ritzel, welches die Bewegung abtriebsseitig auf die Zahnstange überträgt, wobei das Schraubrad antriebsseitig drehfest auf dem Ritzel angeordnet ist.

Eine entsprechende Anordnung wird beispielsweise in der EP 1 339 596 B1 beschrieben. Bei der in der Schrift dargestellten Anordnung ist das, hier speziell als Schneckenrad ausgebildete Schraubrad durch ein gebautes Zahnrad realisiert. Gebaute Zahnräder, welche häufig zum Erhalt der geforderten Festigkeit aus metallischen Komponenten bestehen, aber insbesondere zum gleichzeitigen Erreichen einer hohen Laufruhe einen Zahnkranz aus Kunststoff aufweisen, sind grundsätzlich bekannt. Ein solches gebautes Zahnrad wird außerdem beispielsweise in der WO 2001/44694 A1 beschrieben.

Gegenüber dem in der letztgenannten Schrift beschriebenen, gebauten Zahnrad haben jedoch das aus der EP 1 339 596 B1 bekannte Schraubrad, sowie ein in der später veröffentlichten WO 2005/038303 A1 offenbartes, gebautes Zahnrad den Vorteil, dass sie selbstzentrierend sind. Bei ihnen weisen die beiden äußeren, das Schraubrad gemeinsam mit dem Zahnkranz ausbildenden Scheiben axial gerichtete Vorsprünge auf, welche den Zahnkranz durchragen und in korrespondierende Vertiefungen der jeweils anderen gegenüberliegenden äußeren Scheibe eingreifen. Hierdurch wird eine Selbstzentrierung erreicht, welche zu einer verbesserten Kraftübertragung führt und auch die Montage des Schraubrades vereinfacht Allen vorgenannten Lösungen ist allerdings gemeinsam, dass das montierte Schraubrad beziehungsweise Zahnrad für den Einsatz im Lenkgetriebe einer Zahnstangenlenkung auf ein entsprechendes Ritzel aufgeschoben werden muss. Im Hinblick auf die erforderliche drehfeste Verbindung zwischen dem Schraubrad und dem Ritzel bedingt dies die Einhaltung enger Form- und Lagetoleranzen der Teile, so dass gegebenenfalls dennoch auftretende Toleranzen zu Nacharbeit oder gar Ausschuss führen, wodurch sich in nachteiliger Weise die Fertigungskosten erhöhen. Zudem ist der Montageaufwand zur Realisierung eines aus einem gebauten Schraubrad und einem Ritzel bestehenden Lenkgetriebes immer noch vergleichsweise hoch.

Bei der in der EP 1 339 596 B1 beschriebenen Lösung sind zwischen den beiden äußeren Scheiben beziehungsweise Flanschen des Schraubrades und dessen Zahnkranz ringförmige Abstandshalter aus einem elastischen Material angeordnet, welche nach Aussage der Druckschrift eine gewisse puffernde Wirkung in axialer, radialer und auch tangentialer Richtung haben. Jedoch ist festzustellen, dass die dämpfende Wirkung der Abstandshalter, welche als Flachringe mit mehreren auf den Umfang verteilt angeordneten, radial aufragenden Fortsätzen ausgebildet sind, doch eher gering ist. Aufgrund ihrer Form und der geringen Materialstärke ermöglichen es aber die in der Schrift offenbarten Abstandshalter im Grunde nicht, das Kennungsverhalten in den einzelnen Richtungen gezielt zu beeinflussen.

Aufgabe der Erfindung ist es, eine Lösung zur Ausbildung eines Schraubradgetriebes für eine Zahnstangenlenkung anzugeben, durch welche insbesondere die Form- und Lagetoleranzen der das Getriebe ausbildenden Teile verringert beziehungsweise Toleranzen teilweise vermieden werden können. Ein entsprechendes Schraubradgetriebe soll zudem einen einfachen Aufbau aufweisen, durch den sich der Montageaufwand verringert. Weiterhin soll die zu schaffende Lösung vorzugsweise eine gezielte Beeinflussung der Dämpfungskennlinien hinsichtlich ihres torsionalen und radialen Dämpfungsverhaltens zulassen.

Die Aufgabe wird durch ein Schraubradgetriebe mit den Merkmalen des Hauptanspruchs gelöst. Vorteilhafte Aus- beziehungsweise Weiterbildungen der Erfindung sind durch die Unteransprüche gegeben.

Das zur Lösung der Aufgabe vorgeschlagene Schraubradgetriebe für eine Zahnstangenlenkung besteht, wie grundsätzlich bekannt, aus einem Ritzel, welches abtriebsseitig mit einer Zahnstange kämmt, und einem antriebsseitig drehfest auf dem Ritzel angeordneten Schraubrad, an dem ein durch eine Lenk- oder/und eine Lenkhilfskraft hervorgerufenes Drehmoment angreift. Das Schraubrad ist als gebautes Zahnrad ausgebildet und besteht aus einem Zahnkranz, welcher, bezogen auf die axiale Richtung des Getriebes beziehungsweise seines Ritzels, zwischen zwei Flanschen angeordnet ist. Dabei ist der Zahnkranz auf eine an einem der Flansche ausgebildete Nabe aufgeschoben und mit den Flanschen in einem Formschluss zusammengefügt. Wie bereits dargestellt, ist das Schraubrad für einen funktionsgerechten Aufbau des Getriebes auf dem Ritzel, und zwar auf der, der mit der Zahnstange kämmenden Seite gegenüberliegenden Seite, drehfest angeordnet. Abweichend vom Stand der Technik sind jedoch erfindungsgemäß dabei nicht alle das gebaute Schraubrad ausbildenden Komponenten lediglich in Presspassung auf das Ritzel aufgeschoben. Vielmehr ist einer der Flansche, nämlich der, die Nabe für den Zahnkranz aufweisende Flansch, einstückig mit dem Ritzel ausgebildet. Durch diese einstückige Ausbildung ist zwangsläufig eine drehfeste Anordnung des Flansches an dem Ritzel gegeben. Aufgrund der formschlüssigen Verbindung der anderen Komponenten des gebauten Schraubrades mit diesem Flansch ist das gesamte Schraubrad drehfest an dem Ritzel angeordnet.

Entsprechend einer möglichen Ausführungsform besteht das Ritzel aus Metall und wird zur Realisierung des Verbundes mit dem Flansch und der an dem Flansch ausgebildeten Nabe in einem Spritzgussprozess mit Kunststoff umspritzt. Bei einer anderen Ausbildungsform besteht die Nabe ebenfalls aus Metall, wobei das Ritzel und ein die spätere Nabe ausbildender Metallring zur Herstellung des einstückig mit ihnen verbundenen Flansches gemeinsam mit Kunststoff umspritzt sind. Dabei wird die, den Flansch ausbildende Scheibe nicht vollständig von dem, die Nabe ausbildenden Metallring durchragt.

Eine besonders vorteilhafte Ausbildungsform der Erfindung ist dadurch gegeben, dass die, das Schraubrad ausbildenden Elemente sowohl unter Verzicht auf Schraubverbindungen, als auch unter Verzicht auf Nieten miteinander verbunden werden. Bei dieser Ausbildungsform wird die Verbindung der Elemente des Schraubrades durch einen Übergang zu Klemm- und Steckverbindungen erreicht. Dazu werden zunächst der Zahnkranz des Schraubrades auf die Nabe des einstückig mit dem Ritzel ausgebildeten Flansches und danach der andere Flansch auf das Ritzel aufgeschoben. Die solchermaßen zusammengeführten Teile werden schließlich mittels eines Klemmrings zusammengehalten sowie gemeinsam in axialer Lage und drehfest an dem Ritzel fixiert, welcher auf der dem einstückig mit dem Ritzel ausgebildeten Flansch gegenüberliegenden axialen Seite des Ritzels auf dieses aufgeschoben und an einer Endposition mit einer Nut in Eingriff gebracht wird. Die zuvor erwähnte Nut ist, entsprechend einer Möglichkeit, als umlaufende Nut auf dem Außenumfang des Ritzels ausgebildet. Sofern die, an dem einstückig mit dem Ritzel verbundenen Flansch vorgesehene Nabe aus Metall besteht, kann die umlaufende Nut aber auch durch einen auf dem Außenumfang dieser Nabe vorgesehenen Einstich realisiert sein. Beim Einrasten des Klemmrings in der Nut wird der Klemmring axial gegen die, dem Zahnkranz abgewandte axiale Außenfläche des zweiten, nicht einstückig mit dem Ritzel verbundenen Flansches gedrückt. Gleichzeitig gelangen an den inneren axialen Seitenflächen der Flansche ausgebildete, sich axial in Richtung des Zahnkranzes erstreckende Erhöhungen mit korrespondierenden, auf den axialen Seitenflächen des Zahnkranzes ausgebildeten Vertiefungen in Eingriff. Selbstverständlich ist es jedoch auch denkbar, dass die vorgenannten Erhöhungen auf den äußeren Seitenflächen des Zahnkranzes ausgebildet sind und mit korrespondierenden Vertiefungen auf den axial innen liegenden Seiten, also auf den, dem Zahnkranz zugewandten Seiten, der Flansche in Eingriff gelangen.

Die Erfindung ist vorteilhaft dadurch weitergebildet, dass zwischen den Flanschen und dem Zahnkranz ringförmige elastomere Dämpfungselemente angeordnet sind. Diese sind vorzugsweise als O-Ringe ausgebildet und so gestaltet, dass sie auf ihrem Umfang mehrere radial nach außen aufragende Fortsätze aufweisen, die in Zwischenräume von Erhöhungen hineinragen, welche von den Flanschen oder/und dem Zahnkranz in axialer Richtung aufragen. Mittels der solchermaßen gestalteten Dämpfungselemente wird in vorteilhafter Weise insbesondere eine gute torsionale und radiale Dämpfung erreicht, wobei durch die Dimensionierung der Ringe, also beispielsweise ihre Materialstärke oder die konkrete Ausbildung der auf dem Umfang der O-Ringe vorgesehenen Fortsätze, sowohl das torsionale als auch das radiale Kennungsverhalten in weiten Grenzen beeinflusst werden kann.

Vorzugsweise bestehen der Zahnkranz und der einstückig mit dem Ritzel ausgebildete Flansch (letzterer zumindest abgesehen von der Nabe) aus Kunststoff, während der andere Flansch, zur Erhöhung der Festigkeit des Schraubrades gegebenenfalls auch aus Metall bestehen kann.

Die Erfindung soll nachfolgend anhand eines Ausführungsbeispiels nochmals näher erläutert werden. In den zugehörigen Zeichnungen zeigen:
- Figur 1:: Die Explosionsdarstellung einer möglichen Ausbildungsform des erfindungsgemäßen Getriebes und seiner Komponenten
- Figur 2:: Die Ausbildungsform nach Figur 1 in einer Schnittdarstellung.

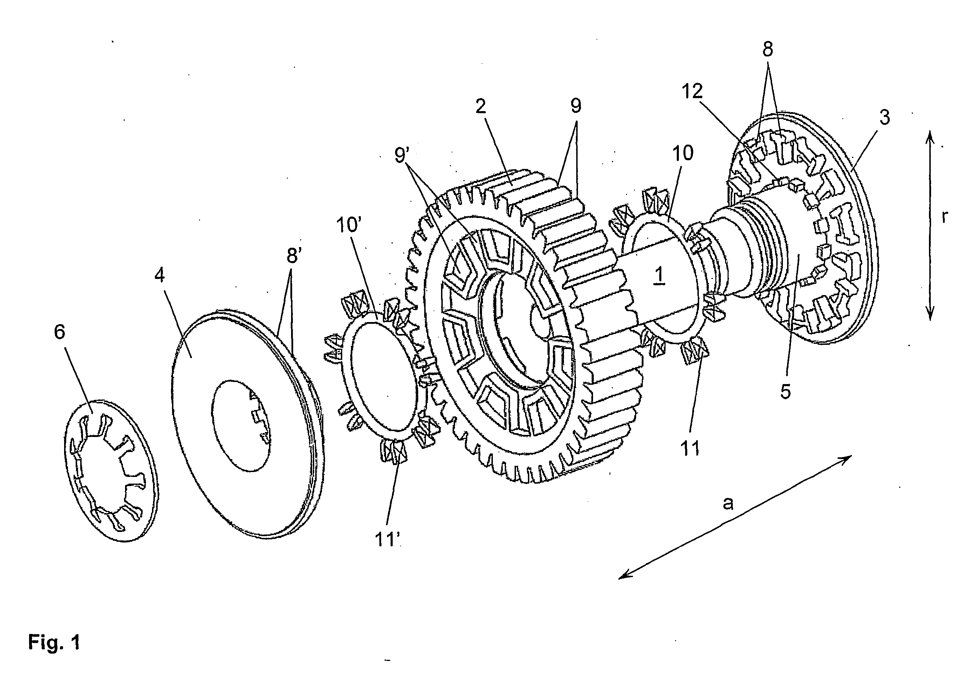

Die Figur 1 zeigt eine mögliche Ausbildungsform des erfindungsgemäßen Schraubradgetriebes in einer Explosionsdarstellung, in welcher dessen wesentliche Komponenten zu erkennen sind. Das Getriebe besteht aus einer Welle beziehungsweise dem Ritzel 1, mit einem darauf an einem axialen Ende drehfest angeordneten Flansch 3. Dieser Flansch bildet einen Teil des auf dem Ritzel 1 zu montierenden, gebauten Schraubrades 2, 3, 4. Er stellt gewissermaßen eine äußere Scheibe des im Wesentlichen aus drei Komponenten bestehenden, gebauten Schraubrades 2, 3, 4 dar. Bei der Montage wird das Schraubrad 2, 3, 4 durch Zusammenfügen des besagten Flansches 3 mit einem Zahnkranz 2 und einem weiteren, auf der anderen Seite des Zahnkranzes 2 angeordneten Flansch 4 ausgebildet.

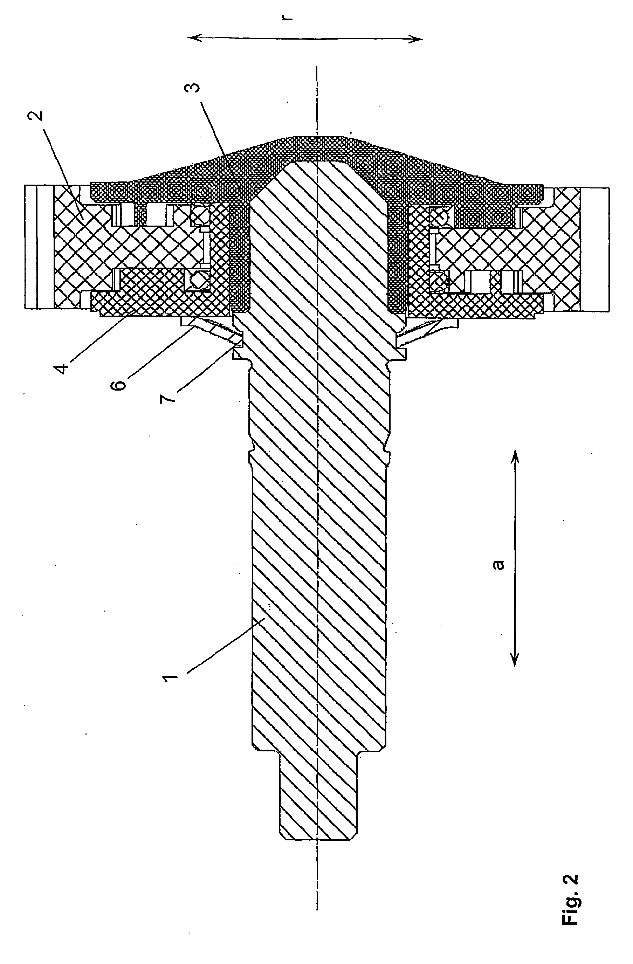

Abweichend vom Stand der Technik ist der Flansch 3, dessen Absatz die Nabe 5 für das Schraubrad 2, 3, 4 ausbildet, nicht auf das Ritzel 1 aufgeschoben, sondern einstückig mit diesem ausgebildet. Der zur Ausbildung der untrennbaren Einheit zwischen Flansch 3 und Ritzel 1 führende Verbund wird dabei in besonders vorteilhafter Weise im Zuge der Kunststoffformgebung beim Spritzguss erreicht, wobei das Ritzel zur Ausbildung des Flansches mit Kunststoff umspritzt wird. Zur Montage des Getriebes und damit des gebauten Zahnrades 2, 3, 4 wird dessen Zahnkranz 2 über das Ritzel 1 auf den die Nabe 5 ausbildenden Absatz des Flansches 3 geführt, anschließend der auf der anderen Seite anzuordnende Flansch 4 montiert und schließlich ein Klemmring 6 auf das Ritzel 1 geschoben, welcher gewissermaßen in einer auf dem Umfang des Ritzels 1 ausgebildeten umlaufenden Nut 7 (siehe hierzu Figur 2) einrastet und dabei die Teile des Schraubrades 2, 3, 4 gegeneinander in ihrer axialen Lage fixiert und sie somit fest miteinander verbindet. Aufgrund ihrer Verbindung mit dem Flansch 3 und dessen einstückiger Ausbildung mit dem Ritzel 1 werden dabei gleichzeitig alle Teile des gebauten Schraubrades 2, 3, 4 drehfest am Ritzel 1 verankert. Bei der dargestellten Ausbildungsform geschieht die Montage des Schraubrades 2, 3, 4 außerdem unter Einfügung zweier jeweils speziell profilierter O-Ringe 10, 10' zwischen jedem der beiden Flansche 3, 4 und dem Zahnkranz 2. Durch den Klemmring 6 und eine entsprechende Profilierung der axial inneren Flächen der Flansche 3, 4 sowie der axialen Außenflächen des Zahnkranzes 2 werden die, das gebaute Schraubrad 2, 3, 4 ausbildenden Komponenten, nämlich die Flansche 3, 4, die O-Ringe 10, 10' und der Zahnkranz 2 in einem Formschluss miteinander verbunden. Hierzu weisen die Flansche 3, 4 sich axial nach innen erstreckende Erhöhungen 8, 8' auf, welche in entsprechende Ausnehmungen 9, 9' in einem radial inneren Bereich der beiden axialen Außenflächen des Zahnkranzes 2, unterhalb seiner gezahnten Lauffläche, eingreifen.

Auch die Formgebung der O-Ringe 10, 10' und der Flansche 3, 4 ist, wie erkennbar, aufeinander abgestimmt, so dass die O-Ringe 10, 10' durch radial auf ihrem Umfang aufragende Fortsätze 11, 11', welche bei der Montage zwischen weiteren auf den Innenseiten beider Flansche vorgesehenen Erhöhungen 12 zur Anlage gelangen, in ihrer Lage positioniert werden. Die elastischen O-Ringe 10, 10' bilden, anders als die Abstandshalter der in der EP 1 339 596 B1 beschriebenen Lenkeinrichtung, Dämpfungselemente aus, durch welche es ermöglicht ist, das Kennungsverhalten insbesondere in radialer und torsionaler Richtung gezielt zu beeinflussen. Dies wird dadurch erreicht, dass die Dämpfungselemente nicht nur als flache Scheiben, wie gemäß der zuvor genannten Schrift, sondern eben als O-Ringe 10, 10' ausgebildet sind. Durch Variation der Materialstärke der O-Ringe 10, 10' in axialer a und/oder radialer r Richtung lässt sich das Kennungsverhalten in der entsprechenden Richtung variieren. Darüber hinaus weisen aber auch die an den O-Ringen 10, 10' ausgebildeten Fortsätze 11, 11' an ihren radialen Enden eine spezielle Form auf. Durch die sich keulenartig an ihren radialen Enden erweiternden Fortsätze 11, 11' wird ein verbessertes torsionales Dämpfungsverhalten erreicht, welches durch die jeweilige genaue Bemessung der Fortsätze 11, 11' beeinflussbar ist.

Der wesentliche Vorteil des erfindungsgemäß ausgebildeten Schraubradgetriebes resultiert jedoch aus der einstückigen Ausbildung des Flansches 3 und des Ritzels 1. Hierdurch werden Toleranzen zwischen diesen Teilen vermieden, wobei der durch sie gebildeten untrennbaren Einheit eine drehfeste Lagerung des Flansches 3 auf dem Ritzel 1 immanent ist. Gleichzeitig weist der Zahnkranz 2 durch das Fehlen axialer Durchbrüche und den Verzicht auf Schrauben oder Nieten zur Verbindung der Flansche 3, 4 eine für das Spritzgussverfahren günstigere Form auf. Durch den Übergang zu Klemm- und Steckverbindungen wird außerdem die Montage wesentlich vereinfacht, wobei über den einstückig mit dem Ritzel 1 ausgebildeten Flansch 3 einerseits und die von der anderen Seite aufgeschobene Klemmscheibe 6 beziehungsweise Tellerfeder andererseits eine zuverlässige axiale Festlegung des Schraubrades 2, 3, 4 erreicht wird.

Die Figur 2 zeigt die Ausbildungsform gemäß Figur 1 im montierten Zustand, wobei das Schraubradgetriebe in axial geschnittener Darstellung wiedergegeben ist. Beim Einsatz des Getriebes greift an das in der vorbeschriebenen Weise montierte, gebaute Schraubrad 2, 3, 4 das von einer Lenk- beziehungsweise Hilfslenkkraft verursachte Drehmoment an. Aufgrund der drehfesten Anordnung des Flansches 3 und der festen Verbindung der übrigen Teile des Schraubrades 2, 3, 4 mit diesem Flansch 3 wird die hierdurch erzeugte Drehbewegung auf das Ritzel 1 übertragen. Abtriebsseitig wird diese Bewegung durch die in der Figur nicht dargestellten Zähne des Ritzels 1, an dessen, in der Zeichnung linken axialen Ende, auf eine ebenfalls nicht dargestellte Zahnstange übertragen und dabei in eine translatorische Bewegung der Zahnstange umgewandelt.

### Bezugszeichenliste

- 1: Ritzel
- 2, 3, 4: Zahnkranz, mit
2 Zahnkranz
3 Flansch
4 Flansch
- 5: Nabe
- 6: Klemmscheibe
- 7: Nut
- 8,8': Erhöhung
- 9, 9': Vertiefung
- 10, 10': Dämpfungselement, z. B. O-Ring
- 11, 11': Fortsatz
- 12: Erhöhung

- a: axial
- r: radial

## Patentansprüche

1. Schraubradgetriebe für eine Zahnstangenlenkung mit einem abtriebseitig mit einer Zahnstange kämmenden Ritzel (1) und einem antriebsseitig drehfest auf dem Ritzel (1) angeordneten Schraubrad (2, 3, 4), an dem ein durch eine Lenk- oder/und eine Lenkhilfskraft hervorgerufenes Drehmoment angreift, wobei das Schraubrad (2, 3, 4) als ein gebautes Zahnrad ausgebildet ist, welches aus zwei Flanschen (3, 4) und einem zwischen den Flanschen angeordneten Zahnkranz (2) besteht, der auf eine an einem der Flansche (3) ausgebildete Nabe (5) aufgeschoben und mit den Flanschen (3, 4) in einem Formschluss zusammengefügt ist, **dadurch gekennzeichnet, dass** der die Nabe (5) aufweisende Flansch (3) einstückig mit dem Ritzel (1) ausgebildet ist.

2. Schraubradgetriebe nach Anspruch 1, **dadurch gekennzeichnet, dass** das Ritzel (1) aus Metall besteht und zur Ausbildung des Flansches (3) mit der Nabe (5) mit Kunststoff umspritzt ist.

3. Schraubradgetriebe nach Anspruch 1, **dadurch gekennzeichnet, dass** das Ritzel (1) und die Nabe (5) aus Metall bestehen und zur Ausbildung des Flansches (3) gemeinsam mit Kunststoff umspritzt sind.

4. Schraubradgetriebe nach Anspruch 2 oder 3, **dadurch gekennzeichnet, dass** der einstückig mit dem Ritzel (1) ausgebildete Flansch (3), der mit einer axialen Seitenfläche an diesem Flansch anliegende Zahnkranz (2) und der andere, an der anderen axialen Seitenfläche des Zahnkranzes (2) angeordnete Flansch (4) mittels eines Klemmrings (6) zusammengehalten sowie gemeinsam in axialer Lage und drehfest an dem Ritzel (1) fixiert sind, welcher auf der dem einstückig mit dem Ritzel (1) ausgebildeten Flansch (3) gegenüberliegenden axialen Seite auf das Ritzel (1) aufgeschoben und dabei mit einer auf dem Außenumfang des Ritzels (1) umlaufenden Nut (7) oder mit einer auf dem Außenumfang, der in diesem Falle aus Metall bestehenden Nabe (5) umlaufenden Nut in Eingriff gebracht ist, so dass der Klemmring (6) axial (a) gegen die dem Zahnkranz (2) abgewandte axiale Außenfläche des Flansches (4) drückt, wobei an den inneren axialen Seitenflächen der Flansche (3, 4) ausgebildete, sich axial (a) in Richtung des Zahnkranzes erstreckende Erhöhungen (8, 8') mit auf den axialen Seitenflächen des Zahnkranzes (2) ausgebildeten Vertiefungen (9, 9') oder an den inneren axialen Seitenflächen der Flansche (3, 4) ausgebildete Vertiefungen mit auf den axialen Seitenflächen des Zahnkranzes (2) ausgebildeten, sich axial (a) in Richtung der Flansche (3, 4) erstreckenden Erhöhungen in Eingriff gelangen.

5. Schraubradgetriebe nach einem der Ansprüche 1 bis 4, **dadurch gekennzeichnet, dass** zwischen den Flanschen (3, 4) und dem Zahnkranz (2) ringförmige elastomere Dämpfungselemente (10, 10') angeordnet sind.

6. Schraubradgetriebe nach einem der Ansprüche 1 bis 4, **dadurch gekennzeichnet, dass** zwischen den Flanschen (3, 4) und dem Zahnkranz (2) O-Ringe (10, 10') aus einem elastomeren Material als Dämpfungselemente angeordnet sind, welche mehrere auf ihrem Umfang radial (r) nach außen aufragende Fortsätze (11, 11') aufweisen, die in Zwischenräume von den Flanschen (3, 4) oder/und dem Zahnkranz (2) in axialer Richtung aufragender Erhöhungen (12) hineinragen.

7. Schraubradgetriebe nach einem der Ansprüche 1 bis 6, **dadurch gekennzeichnet, dass** der Zahnkranz (2) und der Flansch (3), zumindest abgesehen von der Nabe (5), aus Kunststoff bestehen, während der Flansch (4) aus Metall ist.

## Claims

1. Helical gearing for a rack-and-pinion steering system having a pinion (1), which at the output side meshes with a gear rack, and a helical gear (2, 3, 4), which is disposed at the input side in a rotationally fixed manner on the pinion (1) and upon which a torque caused by a steering force or/and by an auxiliary steering force acts, wherein the helical gear (2, 3, 4) takes the form of a constructed gear wheel that comprises two flanges (3, 4) and a gear ring (2), which is disposed between the flanges and is slipped onto a hub (5) formed on one of the flanges (3) and is fitted together with the flanges (3, 4) in a positive engagement,
**characterized in that** the flange (3) having the hub (5) is formed integrally with the pinion (1).

2. Helical gearing according to claim 1, **characterized in that** the pinion (1) is made of metal and in order to form the flange (3) with the hub (5) is extrusion-coated with plastics material.

3. Helical gearing according to claim 1, **characterized in that** the pinion (1) and the hub (5) are made of metal and in order to form the flange (3) are jointly extrusion-coated with plastics material.

4. Helical gearing according to claim 2 or 3, **characterized in that** the flange (3) formed integrally with the pinion (1), the gear ring (2) resting with one axial lateral face against this flange, and the other flange (4) disposed against the other axial lateral face of the gear ring (2) are held together and jointly fixed in axial position and in a rotationally fixed manner on the pinion (1) by means of a clamping ring (6), which is slipped onto the pinion (1) at the axial end lying opposite the flange (3) integrally formed with the pinion (1) and in so doing is brought into engagement with a groove (7) extending round the outer circumference of the pinion (1) or with a groove extending round the outer circumference of the hub (5), which in this case is made of metal, so that the clamping ring (6) presses axially (a) against the axial outer face of the flange (4) remote from the gear ring (2), wherein raised portions (8, 8') formed on the inner axial lateral faces of the flanges (3, 4) and extending axially (a) in the direction of the ring gear come into engagement with recesses (9, 9') formed on the axial lateral faces of the ring gear (2) or recesses formed on the inner axial lateral faces of the flanges (3, 4) come into engagement with raised portions formed on the axial lateral faces of the ring gear (2) and extending axially (a) in the direction of the flanges (3, 4).

5. Helical gearing according to one of claims 1 to 4, **characterized in that** between the flanges (3, 4) and the ring gear (2) annular elastomer damping elements (10, 10') are disposed.

6. Helical gearing according to one of claims 1 to 4, **characterized in that** between the flanges (3, 4) and the ring gear (2) O-rings (10, 10') made of an elastomer material are disposed as damping elements, which have on their circumference a plurality of radially (r) outwardly projecting extensions (11, 11'), which project into intermediate spaces of raised portions (12) projecting in axial direction from the flanges (3, 4) or/and the ring gear (2).

7. Helical gearing according to one of claims 1 to 6, **characterized in that** the ring gear (2) and the flange (3), at least apart from the hub (5), are made of plastics material, while the flange (4) is made of metal.

## Revendications

1. Mécanisme à roue à dents hélicoïdale pour une direction à crémaillère, comprenant un pignon (1) engrenant avec une crémaillère sur son côté sortie, et une roue à denture hélicoïdale (2, 3, 4) montée solidairement en rotation sur le pignon (1) sur son côté entrée, qui est attaquée par un couple engendré par une force de direction et/ou par une force d'assistance de direction, la roue à denture hélicoïdale (2, 3, 4) étant constituée comme une roue dentée composite qui est composée de deux joues (3, 4) et d'une couronne dentée (2) disposée entre les joues, qui est emmanchée sur un moyeu (5) formé sur une des joues (3) et est réunie aux joues (3, 4) par complémentarité de forme, **caractérisé en ce que** la joue (3) qui présente le moyeu (5) est formée en une seule pièce avec le pignon (1).

2. Mécanisme à roue à dents hélicoïdale selon la revendication 1, **caractérisé en ce que** le pignon (1) est en métal et est surmoulé avec de la matière plastique pour la formation de la joue (3) munie du moyeu (5).

3. Mécanisme à roue à dents hélicoïdale selon la revendication 1, **caractérisé en ce que** le pignon (1) et le moyeu (5) sont en métal et sont surmoulés ensemble avec de la matière plastique pour la formation de la joue (3).

4. Mécanisme à roue à dents hélicoïdale selon la revendication 2 ou 3, **caractérisé en ce que** la joue (3) formée en une seule pièce avec le pignon (1), la couronne dentée (2) qui est adjacente à cette joue par une surface latérale axiale et l'autre joue (4) disposée adjacente à l'autre surface latérale axiale de la couronne dentée (2) sont maintenues assemblées ainsi que bloquées en commun dans leur position axiale et solidairement en rotation sur le pignon (1), au moyen d'une bague de serrage (6), laquelle est emmanchée sur le pignon (1) sur le côté axial à l'opposé de la joue (3) formée en une seule pièce avec le pignon (1), et est en même temps mise en prise avec une gorge (7) s'étendant sur la périphérie extérieure du pignon (1) ou avec une gorge s'étendant sur la périphérie extérieure du moyeu (5) qui est en métal dans ce cas, de sorte que la bague de serrage (6) exerce axialement (a) une pression contre la surface axiale extérieure de la joue (4) qui est éloignée de la couronne dentée (2), cependant que des bossages (8, 8') formés sur les surfaces latérales intérieures des joues (3, 4) et qui s'étendent axialement (a) en direction de la couronne dentée entrent en prise avec des évidements (9, 9') formés sur les surfaces latérales axiales de la couronne dentée (2) ou que des évidements formés sur les surfaces latérales axiales intérieures des joues (3, 4) entrent en prise avec des bossages formés sur les surfaces latérales axiales de la couronne dentée (3) et qui s'étendent axialement (a) en direction des joues (3, 4).

5. Mécanisme à roue à dents hélicoïdale selon une des revendications 1 à 4, **caractérisé en ce que,** entre les joues (3, 4) et la couronne dentée (2), sont disposés des éléments amortisseurs élastomères annulaires (10, 10').

6. Mécanisme à roue à dents hélicoïdale selon une des revendications 1 à 4, **caractérisé en ce que,** entre les joues (3, 4) et la couronne dentée (2), sont disposées comme éléments amortisseurs des bagues toriques (10, 10') en matière élastomère, qui présentent plusieurs prolongements (11, 11') qui font saillie radialement (r) vers l'extérieur (10) sur leur périphérie et qui s'engagent dans les des espaces intermédiaires de bossages (12) qui font saillie dans la direction axiale en partant des joues (3, 4) et/ou de la couronne dentée (2).

7. Mécanisme à roue à dents hélicoïdale selon les revendications 1 à 6, **caractérisé en ce que** la couronne dentée (2) et la joue (3) sont faites de matière plastique, du moins à l'exception du moyeu (5), tandis que la joue (4) est en métal.
